# EUROPEAN PATENT APPLICATION

(11) **EP 0 663 761 A2**
(43) Date of publication of application: **19.07.1995**
(21) Application number: 95100313.6
(22) Date of filing: 11.01.1995
(51) Int. Cl.: H04N 1/44

(54) **Cipher data communications apparatus**

(30) Priority: 12.01.1994 JP 1446/94
(71) Applicant: MITA INDUSTRIAL CO. LTD., Osaka 540 (JP)
(72) Inventor: Shibata, Kohichi, c/o Mita Ind. Co.,Ltd., Osaka-shi, Osaka 540 (JP)
(74) Representative: Patentanwälte Beetz - Timpe - Siegfried Schmitt-Fumian - Mayr

(57) **Abstract**

A facsimile apparatus having a function to perform cipher communication by using a cipher key. In this facsimile apparatus, a received cipher data is stored in a memory (4) at first. In outputting the received cipher data stored in the memory when a cipher key used for the received cipher data stored in the memory coincides with a cipher key set at the time of the output, the received cipher data is deciphered and outputted. When the cipher keys do not coincide with each other, the received cipher data stored in the memory is not erased but left in the memory However, a data specified by a command based on an operation of an operation unit can be erased from the memory.

## Description

### BACKGROUND OF THE INVENTION

### Field of the Invention

The present invention relates to a communications apparatus which communicates ciphers, and more particularly, to a communications apparatus such as a facsimile apparatus having a cipher communication function.

### Description of the Prior Art

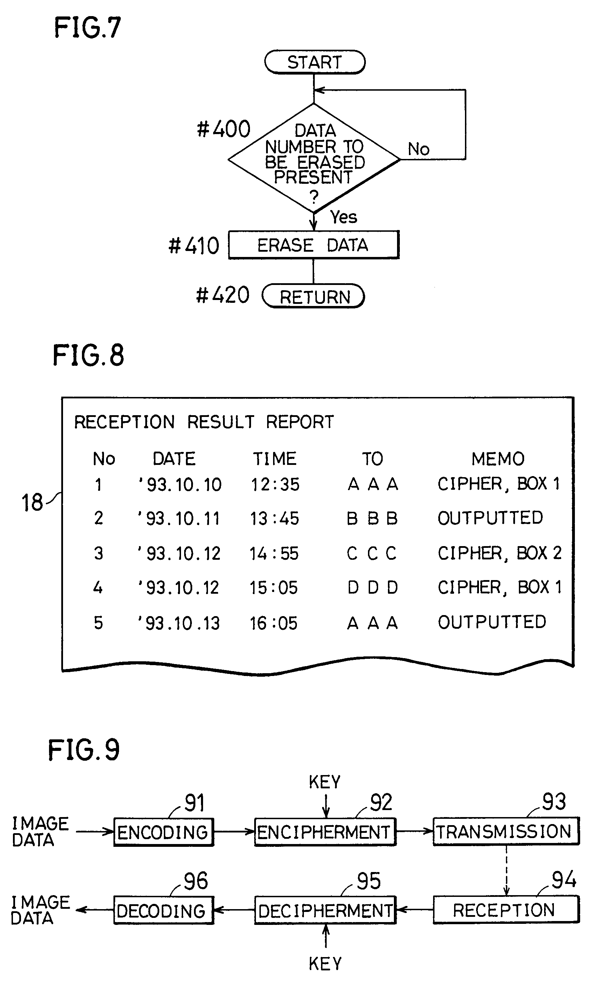

In the facsimile communication, various special communications can be performed as option in communication between facsimile apparatuses of the same manufacturer. The cipher communication is one of such special communications. Fig. 9 shows the procedure of a common cipher communication. A signal processing procedure on the transmitter side is shown at 91 to 93. The image data is encoded at 91.

Then, to make the communication secret, the encoded image data is enciphered by using a key at 92 and transmitted at 93. A signal processing procedure on the receiver side is shown at 94 to 96. The received cipher data received at 94 is deciphered at 95. The decipherment is to clear the cipher by using the same key as that used on the transmitter side. The deciphered data is encoded at 96 and returned to the original image data. The key is a kind of data.

In the conventional facsimile communication using such a cipher key, only when the cipher key of the transmitter side and the cipher key of the receiver side coincide with each other, communication is performed so that the image data is outputted in real time on the receiver side. When the cipher keys do not coincide with each other, communication is discontinued.

Thus, in the conventional facsimile apparatus, communication is discontinued when the cipher key on the transmitter side and the cipher key on the receiver side are different from each other, so that even when an important document is transmitted, the decipherment of the document cannot be re-tried.

### SUMMARY OF THE INVENTION

An object of the present invention is to provide a cipher data communications apparatus with which communication is performed even when the cipher key is different so that the cipher data may be deciphered later with a correct cipher key.

To achieve the above-mentioned object, according to the present invention, in a communications apparatus having a function to perform cipher communication by using a cipher key, a received cipher data is stored in a memory.

Moreover, according to the present invention, in a communications apparatus having a function to perform cipher communication by using a cipher key, when a cipher key prepared on a receiver side is incorrect at the time of a reception of a cipher data, communication is not invalidated and the received cipher data is stored in a memory so that the received cipher data may be deciphered and outputted later by specifying another cipher key. When the cipher keys coincide with each other, the data may be deciphered and outputted in real time or may be stored in the memory.

With respect to the output processing of the received cipher data thus stored in the memory, for example, when a cipher key set on the receiver side at the time of the output of the received cipher data coincides with a cipher key used on the transmitter side, the received cipher data is deciphered and outputted. When the keys do not coincide with each other, the received cipher data stored in the memory is left in the memory. In this case, the decipherment can be re-tried with another cipher key. When a user of the receiver does not know the correct cipher key, he or she can call the transmitter to ask for the correct cipher key. The received cipher data remaining in the memory can arbitrarily be erased by a command based on an operation.

### BRIEF DESCRIPTION OF THE DRAWINGS

This and other objects and features of this invention will become clear from the following description, taken in conjunction with the preferred embodiments with reference to the accompanied drawings in which:
Fig. 1 is a schematic block diagram of a facsimile apparatus embodying the present invention;
Fig. 2 is a view specifically explaining a control unit of the facsimile apparatus of Fig. 1 and showing the connection of the control unit with other elements;
Fig. 3 is a flowchart showing a first example of an operation relating to the reception of cipher communication;
Fig. 4 is a flowchart showing a second example of the operation relating to the reception of cipher communication;
Fig. 5 is a flowchart showing an embodiment relating to the output of a received cipher data;
Fig. 6 is a flowchart showing another embodiment relating to the output of a received cipher data;
Fig. 7 is a flowchart relating to the erasing of a received cipher data stored in the memory;
Fig. 8 is a view showing a reception result report outputted from a facsimile apparatus; and
Fig. 9 is a view showing common operation procedures of the transmitter side and the receiver side.

### DESCRIPTION OF THE PREFERRED EMBODIMENTS

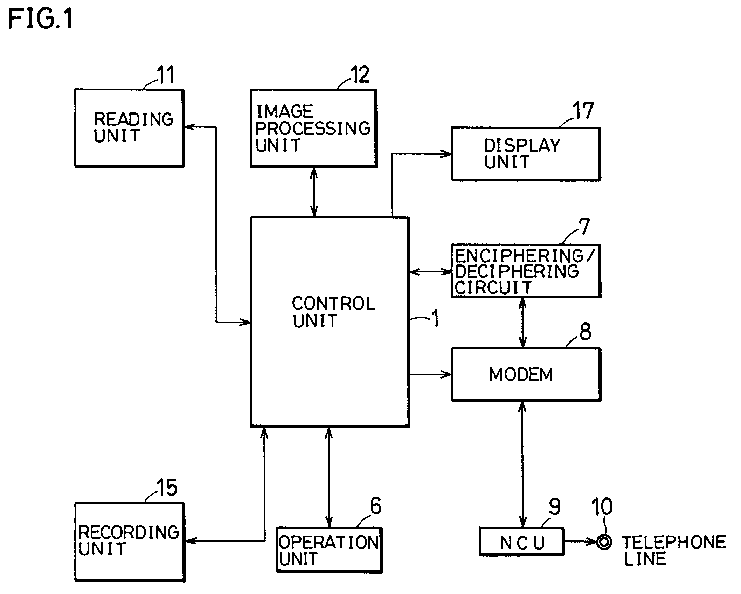

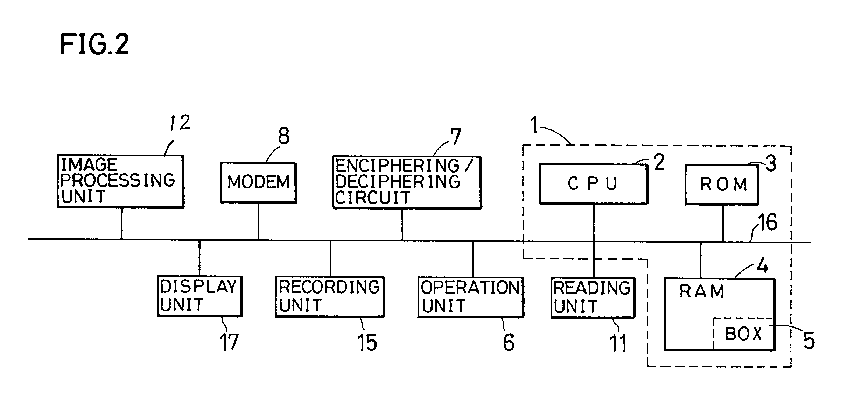

Referring to Fig. 1, there is shown a block diagram of the general structure of a facsimile apparatus embodying the present invention. In the figure, reference numeral 1 represents a control unit comprising a microcomputer which controls the entire apparatus. As shown in Fig. 2, the control unit 1 includes a central processing unit (CPU) 2, a read only memory (ROM) 3 for storing a program and a random access memory (RAM) 4. The RAM has a confidential box 5 as one configuration of the memory area.

Returning to Fig. 1, reference numeral 6 represents an operation unit. Reference numeral 7 represents an enciphering/deciphering circuit. Reference numeral 8 represents a modem. Reference numeral 9 represents a network control unit (NCU). Reference numeral 10 represents a telephone line. Reference numeral 11 represents a reading unit which reads out an original. Reference numeral 12 represents an image processing unit which performs processing (e.g. shading correction) of the read-out image data. Reference numeral 15 represents a recording unit having a printer unit. Reference numeral 17 represents a display unit. The above-mentioned elements and the CPU 2 are connected through a data bus 16 as shown in Fig. 2. The enciphering/deciphering circuit 7 performs encipherment when the facsimile apparatus operates as a transmitter and performs decipherment when it operates as a receiver.

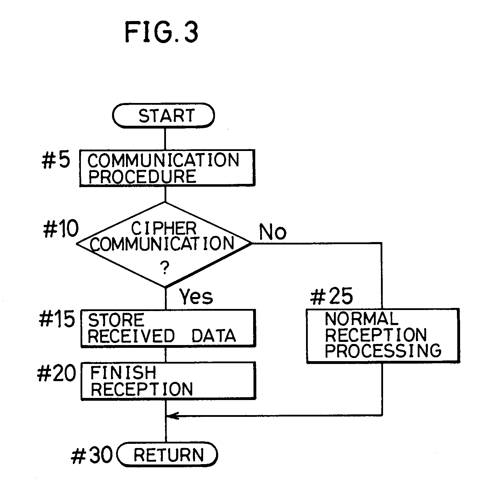

Subsequently, examples of an operation which is performed by the control unit 1 when the facsimile apparatus operates as a receiver in cipher communication will be described. Referring to Fig. 3, there is shown a first example of the operation by the control unit 1. When a call is made from the transmitter side, the program shown in Fig. 3 is activated. First, at step #5, the communication procedure is performed, and at step #10, whether the communication to be performed is cipher communication or not is determined. This determination is made based on a bit of a signal for cipher communication received in the communication procedure.

When the communication to be performed is not cipher communication, the process proceeds to step #25 to perform the normal reception processing. When the communication to be performed is cipher communication, at step #15, the received data is stored in the memory (RAM 4) in the form of the cipher, and after the reception is finished at step #20, the process returns. In the first example, the received data is stored in the memory in the cipher communication. Therefore, the data are not outputted (e.g. printed out by the printer unit at the recording unit) in real time. Thus, the received cipher data is stored in the memory irrespective of whether the cipher keys coincide with each other or not and communication is never discontinued in the middle, so that the decipherment can be retried after the reception.

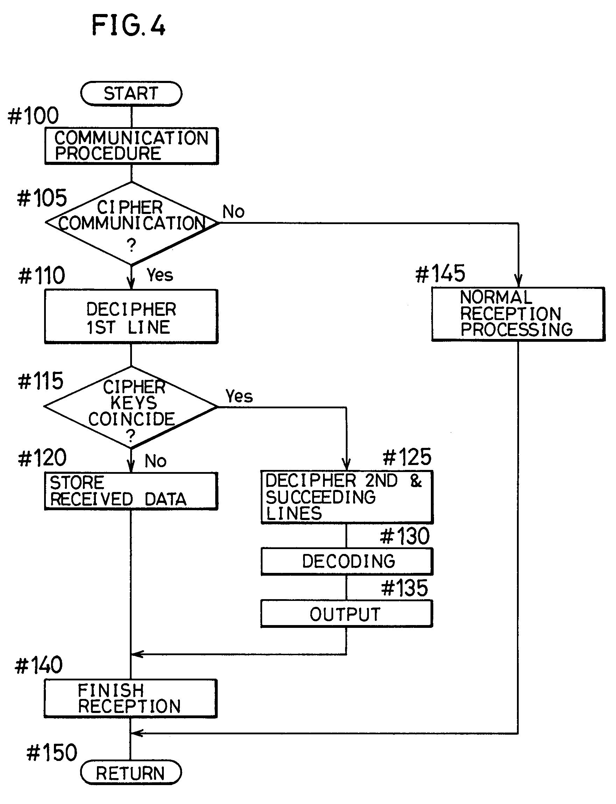

A second example shown in Fig. 4 is the same as the first example in that the communication procedure is performed at step #100, whether the communication to be performed is cipher communication or not is determined at step #105 and when the communication to be performed is not cipher communication, the normal reception processing is performed at step #145. However, the processing performed when it is determined at step #105 that the communication to be performed is cipher communication is different from the first example. Specifically, when cipher communication is performed, at step #110, the cipher is deciphered with respect to a first line (the first line of the lines in the main scanning direction). Then, at step #115, whether the cipher keys coincide with each other or not is determined at step #115.

The image data is represented in the form of a digital data constituted by "1" and "0". For example, when there are five 0s (white) in succession in the image data, the data is represented by a code "01" (encoding). 1 (black) is represented according to a similar predetermined rule. When the code "01" having been enciphered with a key is deciphered with a key prepared on the receiver side, "01" is outputted by the enciphering/deciphering circuit 7 when the keys coincide with each other. By decoding the data "01", an image data 00000 is obtained. However, when the keys do not coincide with each other, not "01" but, for example, "00" is obtained as the decipherment output. Assuming that the "00" is a code representing that there are three 0s in succession, the number of bits are different from the actual number.

When decipherment is performed with respect to the first line (one main scanning direction) based on such a principle, for example when the facsimile apparatus is in a fine mode, the cipher keys coincide with each other when the number of bits of the image data for one line is 1728 bits. When the number is not 1728 bits, the cipher keys do not coincide with each other. When the cipher keys coincide with each other, the process proceeds to step #125 to perform the decipherment with respect to the second and succeeding lines by use of the same cipher key. Then, at step #130, the decoding with respect to all lines is performed. The decoded image data are outputted by the printer unit at the recording unit at step #135.

When it is determined at step #115 that the cipher keys do not coincide with each other, the received data is stored in the memory in the form of the cipher at step #120. Then, the reception is finished at step #140 and the process returns (#150). Thus, in the second example, when the cipher keys coincide with each other, the received data are outputted in real time, and when the cipher keys do not coincide with each other, the data is stored in the memory in the form of the cipher. In the example of Fig. 4, whether the cipher keys coincide with each other or not is determined at the time of the reception of the cipher data. When the cipher keys coincide, the data is printed out. When the cipher keys do not coincide, the data is stored in the memory and communication is never discontinued in the middle. Therefore, the decipherment can be re-tried after the reception.

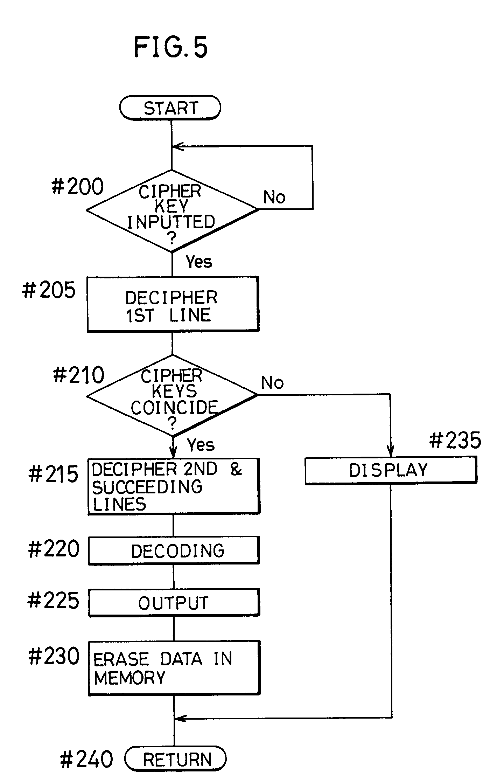

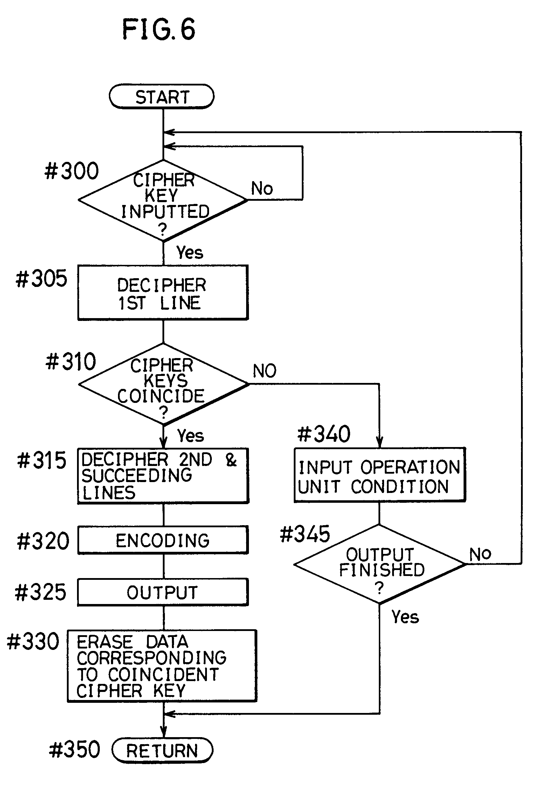

Figs. 5 and 6 show different examples of an output processing with respect to the processing of the cipher stored in the memory as described above (step #15 of Fig. 3 and step #120 of Fig. 4). Referring to Fig. 5, when a print button of the operation unit is operated, the program is started, and at step #200, the process waits until a cipher key is inputted. The input of the cipher key is made based on an operation of the reception unit by the user. When the cipher key is inputted, the first line is deciphered at step #205. Then, whether the cipher keys coincide with each other or not is determined at step #210.

When the cipher keys coincide with each other, the decipherment of the second and succeeding lines is performed (#210). Then, all the lines including the first line are encoded (#220) and printed out (#225). Then, when it is determined at step #230 that the cipher keys do not coincide with each other, the disagreement of the cipher keys is displayed at step #235. Then, the process returns.

Referring to Fig. 6, the process waits until a cipher key is inputted at step #300, and the decipherment is performed with the cipher key with respect to the first line at step #305. Based on the result, whether the cipher keys coincide with each other or not is determined. When they coincide with each other, the decipherment of the second and succeeding lines (#315), the decoding of all the lines including the first line (#320) and the printing out (#325) are performed like in Fig. 5. Then, at the next step #330, only a cipher data corresponding to the coincident cipher key is erased.

When it is determined at step #310 that the cipher keys do not coincide with each other, at step #340, a signal representative of the condition of the operation unit, i.e. whether an output end key has been operated or not is inputted. At step #345, whether the output is finished based on the signal or not is determined. When the output is finished, the process returns. When the output is not finished, the process returns to step #300. When another cipher key is inputted at step #300 and the key is coincident, step #315 and succeeding steps are performed to perform printing out, etc.

Thus, in Fig. 6, only a received data corresponding to a coincident cipher key is read out from the memory and erased after printed out. An original image data corresponding to a disagreeing cipher key is left in the memory. With this, the output of the received data remaining in the memory can be retried by using another cipher key.

Referring to Fig. 7, there is shown the flowchart of an embodiment in which the data stored in the memory can arbitrarily be erased. Generally, facsimile apparatuses are designed to output a reception result report (see Fig. 8). The user sees the report 18 and input the data number of the data to be erased with a ten key of the operation unit. When the erasing mode is set, the control unit activates the program of Fig. 7. At step #400, the process waits until the number of the data to be erased is inputted. When the number is inputted, the data corresponding to the number is erased at step #410. Thus, since the received data remaining in the memory can arbitrarily be erased, the overflow of the image data in the memory is prevented.

When the confidential box 5 of the RAM 4 is used as the memory for storing the received cipher data, it is necessary for the transmitter side to send an ID signal to specify the confidential box 5. For the receiver side to read out data from the confidential box 5, the ID signal and the above-mentioned key is necessary.

Obviously, many modifications and variations of the present invention are possible in light of the above teachings. It is therefore to be understood that within the scope of the appended claims, the invention may be practiced other than as specifically described.

## Claims

1. A cipher data communications apparatus comprising:
receiving means for receiving a data enciphered and transmitted;
deciphering circuit (7) which deciphers a received enciphered data;
outputting means (17) for outputting a deciphered data in a visible form;
a memory (4) for storing a data therein;
means for setting a cipher key data necessary to decipher the enciphered data at the deciphering circuit (7);
determining means for determining whether a received data is an enciphered data or not; and
controlling means (1) for controlling so that the received data is stored in the memory when the received data is an enciphered data.

2. A cipher data communications apparatus according to claim 1, wherein said controlling means (1) causes the outputting means (17) to output the received data when the received data is not an enciphered data.

3. A cipher data communications apparatus according to claim 1, wherein said controlling means (1) is provided with a function to control so that, in outputting the received enciphered data stored in the memory (4), the received enciphered data is deciphered and outputted when a cipher key used for the received enciphered data stored in the memory (4) and a cipher key set at the time of an output coincide with each other and that the received enciphered data stored in the memory (4) is not erased but left in the memory (4) when the cipher keys do not coincide with each other.

4. A cipher data communications apparatus according to claim 1, wherein said controlling means (1) is further provided with a function to erase a data specified by a command based on an operation.

5. A cipher data communications apparatus according to claim 1, wherein said communications apparatus is a facsimile apparatus.

6. A cipher data communications apparatus comprising:
receiving means for receiving a data enciphered and transmitted;
deciphering circuit (7) for deciphering a received enciphered data;
outputting means (17) for outputting a deciphered data in a visible form;
a memory (4) for storing a data therein;
means for setting a cipher key data necessary to decipher the enciphered data at the deciphering circuit (7); and
controlling means (1) for controlling so that the enciphered data is stored in the memory (4) when a set cipher key data does not coincide with a cipher key data of the received enciphered data.

7. A cipher data communications apparatus according to claim 6, wherein said communications apparatus is a facsimile apparatus.

8. A cipher data communications apparatus according to claim 6, wherein said controlling means (1) causes the outputting means (17) to output a deciphered data when the set cipher key data and the cipher key data of the received enciphered data coincide with each other.

9. A cipher data communications apparatus according to claim 6, wherein when another cipher key data is set by the setting means, said controlling means (1) determines whether the enciphered data stored in the memory (4) can be deciphered by the cipher key data or not, and when the enciphered data can be deciphered, the controlling means (1) causes the outputting means (17) to output a deciphered data.

10. A cipher data communications apparatus according to claim 9, wherein an enciphered data corresponding to the outputted deciphered data is erased from the memory (4).

11. A communications apparatus having a function to perform cipher communication by using a cipher key, wherein a received cipher data is stored in a memory (4) at first, and the data is deciphered and outputted later.

12. Cipher data communication method with the following steps:
receiving a data enciphered and transmitted;
deciphering a received enciphered data in a deciphering circuit (7);
outputting a deciphered data in a visible form;
storing a data in a memory (4);
setting a cipher key data necessary to decipher the enciphered data at the deciphering circuit (7);
determining whether a received data is an enciphered data or not; and
storing the received data in the memory when the received data is an enciphered data.
